# EUROPÄISCHE PATENTSCHRIFT

(11) **EP 3 385 132 B1**
(45) Veröffentlichungstag und Bekanntmachung des Hinweises auf die Patenterteilung: **19.02.2020**
(21) Anmeldenummer: 18020132.9
(22) Anmeldetag: 04.04.2018
(51) Int. Cl.: B60S 1/56

(54) **VORRICHTUNG ZUM SAUBERHALTEN EINES OPTISCHEN ELEMENTS**
DEVICE TO KEEP AN OPTICAL ELEMENT CLEAN
DISPOSITIF PERMETTANT DE MAINTENIR PROPRE UN ÉLÉMENT OPTIQUE

(30) Priorität: 05.04.2017 DE 102017107320
(43) Veröffentlichungstag der Anmeldung: 10.10.2018
(73) Patentinhaber: IAV GmbH, 10587 Berlin (DE)
(72) Erfinder: Manfred, Krenge, 38162 Cremlingen (DE)
(74) Vertreter: Fukala, Georg

(56) Entgegenhaltungen:
- US-A1- 2012 117 745
- US-A1- 2013 048 036
- US-A1- 2013 146 577
- US-A1- 2014 270 379

## Beschreibung

### Technisches Gebiet

Die Erfindung betrifft eine Vorrichtung zum Sauberhalten eines optischen Elements gemäß dem Oberbegriff des Anspruchs 1.

### Stand der Technik

Aus der DE 10 2014 117 165 A1 ist ein fahrzeugintegriertes Sicht- und Reinigungssystem umfassend ein Gehäuse, welches an einer Fahrzeugkarosserie befestigt ist, eine Sensoreinheit, einen Düsenträger, eine Reinigungsfluidquelle, eine Reinigungsfluidpumpe, einen Reinigungsfluidkreis oder eine Reinigungsfluidleitung und wenigstens eine Reinigungsfluiddüse, die mit dem Düsenträger verbunden ist und mit der Reinigungsfluidquelle kommuniziert.

Der Düsenträger ist in das Gehäuse integriert und innerhalb des Gehäuses zwischen ersten und zweiten Stellungen bewegbar, wobei die erste Stellung eine zurückgezogene Stellung ist, in welche der Düsenträger unterhalb oder fluchtend zu einer äußeren Fahrzeug-Karosserieoberfläche angeordnet ist, wobei die zweite Stellung eine Betriebsstellung ist, in welcher die Düse auf eine exponierte Oberfläche der Sensoreinheit zielt, so dass das Reinigungsfluid in der Betriebsstellung auf die exponierte Oberfläche der Sensoreinheit befördert wird.

Die DE 10 2014 110 468 A1 beschreibt eine Kameraeinheit für ein Kraftfahrzeug, mit einem Trägergehäuse, das in einem Durchbruch einer Außenverkleidung eines Fahrzeuges anzuordnen ist, einer Antriebseinheit, die mit dem Trägergehäuse verbunden ist, einer bewegbar gelagerten Kamera, die in dem Trägergehäuse aufgenommen und mit der Antriebseinheit gekoppelt ist, um mittels der Antriebseinheit gegenüber dem Trägergehäuse zwischen mehreren Kamerastellungen bewegt zu werden, einer an dem Trägergehäuse gelagerten Schutzabdeckung, die gegenüber dem Trägergehäuse zwischen mehreren Schutzabdeckungsstellungen bewegbar ist.

Wenn die Kamera sich in einer ersten Kamerastellung befindet, ist die Kamera von der Schutzabdeckung in einer ersten Schutzabdeckungsstellung bedeckt.

Wenn sich die Kamera in einer zweiten Kamerastellung befindet, ist die Kamera von der Schutzabdeckung in einer zweiten Schutzabdeckungsstellung wenigstens teilweise freigelegt.

An dem Trägergehäuse ist eine Fluidverteilungseinrichtung angeordnet, wobei die Fluidverteilungseinrichtung wenigstens einen Fluidauslass zum Ausstoßen eines Fluids in Richtung der Kamera aufweist, um ein Reinigungsfluid auf die Kamera aufzubringen, wobei der Fluidauslass zwischen Kamera und Schutzabdeckung in direkter Sichtlinie zu der Kamera in der ersten Kamerastellung angeordnet ist.

In der EP 1 265 775 B1 wird eine Einrichtung zum Sauberhalten optischer Elemente in Kraftfahrzeugen, insbesondere Sensor- oder Kamera-Abdeckungen, wobei die transparente Abdeckung mit gezieltem Gas-, insbesondere Luftstrom, derart beaufschlagt wird, dass bei Bewegung der Abdeckung relativ zur Umgebung keine Umgebungsatmosphäre, insbesondere Umgebungsluft, die Oberfläche der Abdeckung erreicht, beschrieben.

Es ist eine im Wesentlichen senkrecht von der Abdeckung hervorstehende Abschirmung vorgesehen, welche die transparente Abdeckung in etwa ringförmig umschließt und einen Stauraum vor der Oberfläche der Abdeckung bildet.

Gemäß der US 2014/270379 A1 ist eine Vorrichtung zum Sauberhalten eines optischen Elements eines Fahrzeugs gemäß dem Stand der Technik, wobei mindestens eine Düse an einem Düsenträger angeordnet ist. Mittels der Düse ist ein Medium auf die Linse des optischen Elements aufbringbar. Eine Zuführungsleitung des Mediums ist innerhalb des Düsenträgers angeordnet. Der Düsenträger ist weiterhin außerhalb eines Sichtfeldes des optischen Elements angeordnet.

### Aufgabe der Erfindung

Der Erfindung liegt die Aufgabe zugrunde, eine Vorrichtung zum Sauberhalten eines optischen Elements eines Fahrzeugs bereitzustellen, welche eine Montage an ein bereits am Fahrzeug verbautes optisches Element ermöglicht.

### Lösung der Aufgabe

Die Erfindung wird durch eine Vorrichtung gemäß Anspruch 1 gelöst.

### Vorteile der Erfindung

Bei der erfindungsgemäßen Vorrichtung ist am Außenumfang der Linse des optischen Elements, beispielsweise eine Kamera, eine starre Hülse angeordnet.

In diese Hülse wird von mindestens einer Düse ein Medium, beispielsweise verdichtete Luft, in einem Winkel im Bereich von 30° bis 50° zugeführt.

Die räumliche Anordnung der Düse sowie des Winkels wird derart gewählt, dass bei der Zuführung von dem Medium innerhalb der Hülse ein Überdruck und Verwirbelungen entstehen, die verhindern, dass sich Partikel auf der Linse des optischen Elements absetzen können.

Die Anordnung der Hülse an dem Außenumfang der Linse und die von dem optischen Element beabstandete Anordnung des Düsenträgers ermöglicht ein im Vergleich zum Stand der Technik vereinfachtes Nachrüsten an bereits am Fahrzeug befindlichen optischen Elementen.

In einer vorteilhaften Ausführungsform der erfindungsgemäßen Vorrichtung weist der Düsenträger eine Abschirmung auf, die außerhalb des Sichtfeldes des optischen Elements angeordnet ist.

Mittels der Abschirmung kann verhindert werden, dass die Linse in Vollkontakt mit Gegenständen, beispielsweise Schnee, kommt oder beschädigt wird.

### Zeichnungen

Es zeigen:
- Fig. 1:: eine Ausführungsform einer erfindungsgemäßen Vorrichtung im Längsschnitt;
- Fig. 2:: eine Vorderansicht der Ausführungsform gemäß Fig. 1.

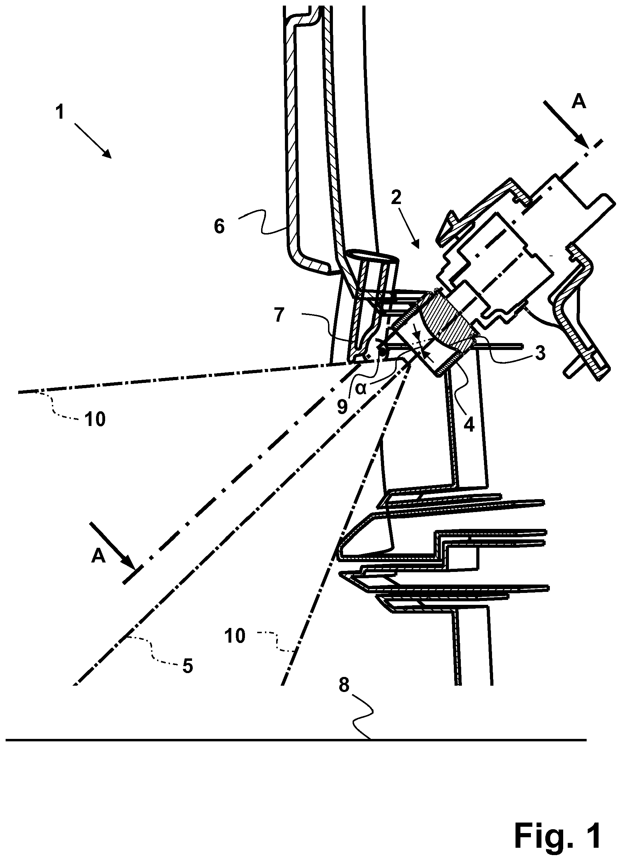

Die Figur 1 zeigt eine Ausführungsform einer erfindungsgemäßen Vorrichtung 1 im Längsschnitt.

Ein optisches Element 2, beispielsweise eine Kamera, ist an einem Fahrzeug angeordnet.

In dieser Ausführungsform ist das optische Element 2 im Frontbereich des Fahrzeugs angeordnet.

An einem Außenumfang einer Linse 3 des optischen Elements 2 ist eine Hülse 4 angeordnet.

Die Hülse 4 ist starr und somit nicht beweglich zu der Linse 3 angeordnet.

Die Längsachse der Hülse 4 stimmt mit der optischen Achse 5 des optischen Elements 2 überein.

Unterhalb eines Kennzeichenträgers 6 des Fahrzeugs ist ein Düsenträger 7 angeordnet, d.h. der Düsenträger 7 ist in einem Bereich zwischen dem Kennzeichenträger 6 und einer Fahrbahn 8 angeordnet.

An dem Düsenträger 7 ist mindestens eine Düse 9 angeordnet.

Mittels der Düse 9 kann ein Medium in einem Winkel α im Bereich von 30° bis 50° zu der optischen Achse 5 des optischen Elements 2 auf eine Oberfläche einer Linse 3 des optischen Elements 2 zugeführt werden, wobei der Winkel α sich aus dem Abstand der Düse 9 zur Linse 3 sowie aus einem darzustellenden Sichtfeld ergibt.

Eine Zuführungsleitung für das Medium zu der Düse 9 kann innerhalb des Düsenträgers 7 angeordnet sein.

Das Medium ist beispielsweise Luft, welches mittels eines Kompressors oder Fahrtwind, der zuvor von Partikeln gereinigt werden kann, der Düse 9 zugeführt wird.

Der Düsenträger 7 und die Düse 9 sind außerhalb eines Sichtfelds 10 des optischen Elements 2 und außerhalb der Hülse 4, d.h. beabstandet von der Hülse 4, angeordnet.

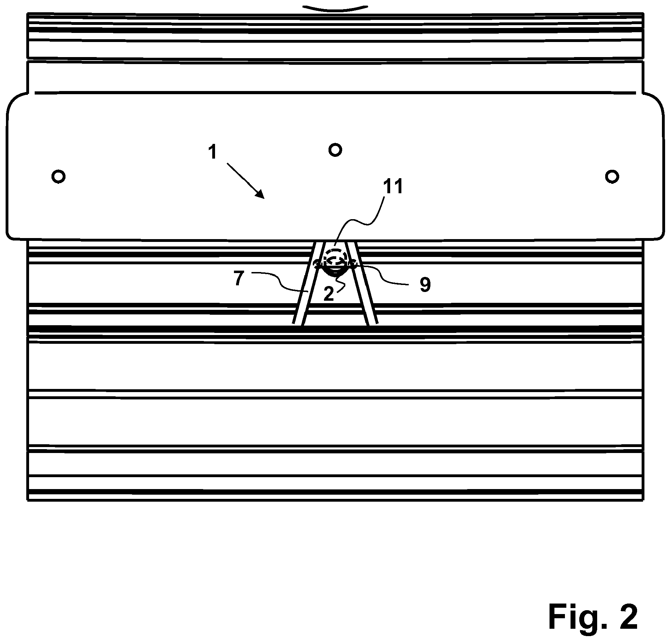

Die Figur 2 zeigt eine Vorderansicht der in Figur 1 dargestellten Vorrichtung 1.

Der Düsenträger 7 umfasst zwei Düsen 9, die an gegenüberliegenden Seiten des Düsenträgers 7 angeordnet sind.

Der Abstand zwischen den beiden Düsen 9 ist größer im Vergleich zu dem Außendurchmesser der Hülse 4.

Zudem ist zwischen den gegenüberliegenden Seiten des Düsenträgers 7 eine starre, d.h. nicht bewegliche, Abschirmung 11 angeordnet.

Die Abschirmung 11 ist außerhalb eines Sichtfelds 10 des optischen Elements 2 und außerhalb der Hülse 4, d.h. beabstandet von der Hülse 4, angeordnet.

Die Abschirmung 11 verhindert, dass die Linse 3 in Vollkontakt mit Gegenständen, beispielsweise Schnee, kommt und nicht durch diese Gegenstände beschädigt wird.

### Bezugszeichenliste

- 1: Vorrichtung
- 2: optisches Element
- 3: Linse
- 4: Hülse
- 5: optische Achse

- 6: Kennzeichenträger
- 7: Düsenträger
- 8: Fahrbahn
- 9: Düse
- 10: Sichtfeld

- 11: Abschirmung

- α: Winkel

## Patentansprüche

1. Vorrichtung (1) zum Sauberhalten eines optischen Elements (2) eines Fahrzeugs,
wobei das optische Element (2) am Außenumfang seiner Linse (3) eine starre Hülse (4) aufweist,
und mindestens eine Düse (9) an einem Düsenträger (7) angeordnet ist,
wobei mittels der Düse (9) ein Medium auf die Linse (3) des optischen Elements (2) in einem Winkel (α) im Bereich von 30° bis 50° zu einer optischen Achse (5) des optischen Elements (2) aufbringbar ist, so dass bei der Zuführung von dem Medium innerhalb der Hülse (4) ein Überdruck und Verwirbelungen entstehen, die verhindern, dass sich Partikel auf der Linse (3) des optischen Elements (2) absetzen können,
und die Düse (9) außerhalb der Hülse (4) angeordnet ist,
und wobei eine Zuführungsleitung des Mediums innerhalb des Düsenträgers (7) angeordnet ist,
und wobei der Düsenträger (7) außerhalb eines Sichtfeldes (10) des optischen Elements (2) angeordnet ist.

2. Vorrichtung nach Anspruch 1, **dadurch gekennzeichnet, dass** der Düsenträger (7) eine Abschirmung (11) aufweist, die außerhalb des Sichtfeldes (10) des optischen Elements (2) angeordnet ist.

## Claims

1. Apparatus (1) for keeping an optical element (2) of a vehicle clean,
wherein the optical element (2) has a rigid sleeve (4) on the outer periphery of its lens (3),
and at least one nozzle (9) is arranged on a nozzle carrier (7),
wherein a medium is able to be applied, using the nozzle (9), on the lens (3) of the optical element (2) at an angle (α) in the range from 30° to 50° with respect to an optical axis (5) of the optical element (2), such that, when the medium is supplied, a positive pressure and eddies develop within the sleeve (4) that prevent particles from being able to deposit on the lens (3) of the optical element (2),
and the nozzle (9) is arranged outside the sleeve (4), and wherein a supply line of the medium is arranged within the nozzle carrier (7),
and wherein the nozzle carrier (7) is arranged outside a field of view (10) of the optical element (2).

2. Apparatus according to Claim 1, **characterized in that** the nozzle carrier (7) has a screen (11), which is arranged outside the field of view (10) of the optical element (2).

## Revendications

1. Dispositif (1) pour maintenir propre un élément optique (2) d'un véhicule, l'élément optique (2) présentant sur la périphérie extérieure de sa lentille (3) une gaine rigide (4),
et au moins une buse (9) étant disposée sur un support de buse (7),
un milieu pouvant être appliqué au moyen de la buse (9) sur la lentille (3) de l'élément optique (2) suivant un angle (α) dans une plage de 30° à 50° par rapport à un axe optique (5) de l'élément optique (2) de telle sorte que lors de l'alimentation en milieu à l'intérieur de la gaine (4), il se produise une surpression et des tourbillons qui empêchent que des particules puissent se déposer sur la lentille (3) de l'élément optique (2),
et la buse (9) étant disposée à l'extérieur de la gaine (4),
et une conduite d'alimentation en milieu étant disposée à l'intérieur du support de buse (7),
et le support de buse (7) étant disposé à l'extérieur d'un champ de vision (10) de l'élément optique (2).

2. Dispositif selon la revendication 1, **caractérisé en ce que** le support de buse (7) présente une protection (11) qui est disposée à l'extérieur du champ de vision (10) de l'élément optique (2).
